(19) Europäisches Patentamt
European Patent Office
Office européen des brevets

(11) **EP 1 078 433 B1**

(12) **EUROPÄISCHE PATENTSCHRIFT**

(45) Veröffentlichungstag und Bekanntmachung des Hinweises auf die Patenterteilung:
**30.09.2009 Patentblatt 2009/40**

(51) Int Cl.:
*H02H 7/04* (2006.01)    *H02H 6/00* (2006.01)

(21) Anmeldenummer: **99917684.5**

(22) Anmeldetag: **06.05.1999**

(86) Internationale Anmeldenummer:
**PCT/AT1999/000110**

(87) Internationale Veröffentlichungsnummer:
**WO 1999/060682 (25.11.1999 Gazette 1999/47)**

(54) **VERFAHREN UND ANORDNUNG ZUR ERMITTLUNG VON ZUSTANDSGRÖSSEN**

METHOD AND DEVICE FOR DETERMINING STATE VARIABLES

DISPOSITIF ET PROCEDE PERMETTANT DE DETERMINER DES GRANDEURS D'ETAT

(84) Benannte Vertragsstaaten:
**AT DE FR GB IT**

(30) Priorität: **14.05.1998 AT 82898**

(43) Veröffentlichungstag der Anmeldung:
**28.02.2001 Patentblatt 2001/09**

(73) Patentinhaber: **Siemens Transformers Austria GmbH & Co. KG**
**1210 Wien (AT)**

(72) Erfinder: **SEITLINGER, Walter**
**A-8160 Weiz (AT)**

(74) Vertreter: **Maier, Daniel Oliver et al**
**Siemens AG**
**CT IP Com E**
**Postfach 22 16 34**
**80506 München (DE)**

(56) Entgegenhaltungen:
**FR-A- 2 526 599**        **US-A- 4 654 806**

**Beschreibung**

Die Erfindung betrifft ein Verfahren zur Ermittlung von Zustandsgrößen, insbesondere der Temperaturen, in einem ölgekühlten Transformator, bei dem die Eingabegrößen, gemessen werden, und der Status von Kühlaggregaten und gegebenenfalls die Stellung von Schaltern festgestellt wird, sowie eine Anordnung zum Ausführen des Verfahrens.

Transformatoren sind elektrotechnische Geräte, die heute bereits einen sehr hohen Grad an technischer und technologischer Reife erreicht haben. Dennoch sind immer noch Weiterentwicklungen möglich und notwendig, die aber mit entsprechend hohem Aufwand und Risiko, auch in wirtschaftlicher Hinsicht, verbunden sind.

Im derzeit entstehenden Umfeld des freien Austauschs elektrischer Energie über große Entfernungen wird die Frage, wieweit ein Transformator mit Überlast betrieben werden kann, ohne dabei signifikant an Lebensdauer zu verlieren, zunehmend an Bedeutung gewinnen.

Als gegenwärtiger Stand der Technik werden dazu die Dokumente US-A-4 654 804 und FR-A-2 526 599 angesehen.

Das erstgenannte Dokument offenbart ein Verfahren zur Überwachung und Analyse von Transformatorparametern, wie z.B. Temperaturen, Windungsströme, Öldruck, etc. Alle zu überwachenden Parameter müssen dabei über Sensoren abgegriffen werden und werden dann mit vorgegebenen Grenzwerten verglichen. Dazu müssen vorab Grenzwerte festgelegt werden, die nicht auf äußerliche Umstände im Umfeld des Transformators, wie z.B. die Umgebungstemperatur, Rücksicht nehmen. Da die Analyse aller Transformatorparameter hier auf einem einfachen Vergleich beruht, kann dieses Verfahren auch nicht zu einer Simulation bestimmter Situationen herangezogen werden.

Das zweite Dokument, die FR-A-2 526 599, offenbart ein einfaches thermohydraulisches Modell einer elektrischen Maschine, wie ein Transformator oder ein Motor, zur Simulation der Temperatur in den Leitern und im Kern der elektrischen Maschine in Abhängigkeit der Temperatur und der Flussmenge des Kühlmediums.

Die Aufgabe der Erfindung besteht nun darin, ein Verfahren zu schaffen, das Informationen über wichtige Temperaturen im Transformator und in der Kühlflüssigkeit, z.B. die Hotspot- und Hot-Oil-Temperaturen, liefert und zusätzlich für Prognose, Simulation und Analyse genutzt werden kann.

Die oben gestellte Aufgabe wird dadurch gelöst, dass Eingabegrößen, insbesondere die Spannungen an den Transformatorklemmen, die Ströme in den Wicklungen und die Umgebungstemperatur gemessen wird bzw. werden, und der Status von Kühlaggregate, welcher Lüfter, Pumpen usw. sind, und gegebenenfalls die Stellung eines Schalters, wie z.B. eines Stufenschalters od. dgl., festgestellt wird, dass diese Eingabegrößen sowie der Status der Kühlaggregate und die Schalterstellung einem thermohydraulischen Modell zugeführt werden und dass im thermohydraulischen Modell mit Hilfsgrößen, welche beispielsweise Verluste im Transformator, Parameter für den Wärmeübergang, Strömungswiderstände und die Strömungsgeschwindigkeiten im Ölkreislauf sind, und einem hydraulischen Netzwerk des Ölkreislaufes, welches Zweige und Knoten aufweist, Zustandsgrößen berechnet werden, wobei diese Zustandsgrößen, vorzugsweise die mittleren Temperaturen und die Hotspot-Temperaturen in verlusterzeugenden Transformatorteilen und die mittleren Öltemperaturen, in Zweigen und in Knoten des hydraulischen Netzwerkes des Ölkreislaufes sind und dass bei einer Änderung der Eingabegrößen und/oder des Status der Kühlaggregate und/oder der Schalterstellung die Hilfsgrößen entsprechend dem aktuellen Wert der Zustandsgrößen angepasst werden und anschließend die zeitliche Änderung der Zustandsgrößen berechnet wird und mit diesen Änderungen neue Zustandsgrößen berechnet werden. Es ist mit diesem Verfahren somit möglich, die Betriebstemperaturen und auch die kritischen Temperaturen sowie deren Änderungen in Teilen des Transformators ohne Temperaturfühler zu ermitteln, wodurch der optimale Betrieb eines Transformators gewährleistet wird. Mit dem thermohydraulischen Modell des mit Öl gekühlten Transformators wird das Verhalten der Temperaturen im Kern, in den Wicklungen und im Öl, sowohl bei stationären als auch transienten Vorgängen ermittelt. Der Zusatz "hydraulisch" weist darauf hin, dass auch das hydraulische Verhalten des Öles durch das Modell beschrieben wird.

Vorteilhaft ist eine Ausbildung nach Anspruch 2, da dies die zielführendste Möglichkeit ist, die Änderungsgeschwindigkeit der Zustandsgrößen zu ermitteln.

Durch die Ausbildung nach Anspruch 3 ist es möglich, auf einem Digitalrechner die Leerlaufverluste in den einzelnen Teilen des Kerns direkt aus den Klemmenspannungen zu berechnen.

Nach einer Ausführungsvariante gemäß Anspruch 4 werden alle durch die gemessenen Ströme verursachten Erwärmungen von Teilen im Transformator ermittelt.

Durch die Ausbildung nach Anspruch 5 und auch nach Anspruch 6 wird der Einfluss der Schalterstellung auf die Verteilung des magnetischen Hauptflusses, die Verteilung der internen Ströme und auch auf die Werte der ohmschen Widerstände einzelner Wicklungszweige berücksichtigt.

Nach einer Ausführungsvariante gemäß Anspruch 7 wird der Einfluss des Betriebszustandes der Lüfter auf die Kühlung beschrieben.

Vorteilhaft ist die Ausgestaltung nach Anspruch 8, da mit dieser Differentialgleichung auf einfache Weise die mittleren Temperaturen in verlusterzeugenden Teilen ermittelt werden.

Bei der Ausgestaltung nach Anspruch 9 ist von Vorteil, dass die an das vorbeiströmende Öl abgegebene Verlustleistung, welche in die Differentialgleichung für die mittleren Temperaturen eingeht, mit nur wenigen Rechenoperationen ermittelt wird. Diese Verlustleistung ist immer die für jenen Teil, für den gerade mit der Differentialgleichung die mittlere Temperatur berechnet wird.

Von Vorteil ist auch eine Ausbildung nach Anspruch 10, da die Differentialgleichung für die Hotspot-Temperaturen in den verlusterzeugenden Teilen die gleichen Berechnungsvorgänge wie jene für die mittleren Temperaturen aufweist, können bei einer Lösung dieser Gleichungen auf einem Digitalrechner die gleichen Programmschritte verwendet werden. Die Unterschiede an der Heißstelle gegenüber den Mittelwerten hinsichtlich Verlusterzeugung, Wärmeübergang und Wärmekapazität können trotzdem über die entsprechenden Parameter exakt vorgegeben werden.

Vorteilhaft ist auch eine Ausgestaltung nach Anspruch 11, für die äquivalent das gleiche gilt wie für die Ausbildung nach Anspruch 10. Auch hier gilt, dass die Verlustleistung immer für jenen Teil ermittelt wird, für den gerade mit der Differentialgleichung die Hotspot-Temperatur festgelegt wird.

Bei der Ausbildung gemäß Anspruch 12 werden mit einer einfachen Differentialgleichung die mittleren Öltemperaturen in Zweigen des hydraulischen Netzwerkes des Ölkreislaufes berechnet.

Nach einer vorteilhaften Weiterbildung gemäß Anspruch 13 wird die von jenem Zweig an die Umgebung abgegebene Wärmeleistung ermittelt, für den anschließend mit der Differentialgleichung die mittlere Öltemperatur festgelegt wird.

Von Vorteil ist auch eine Ausbildung nach Anspruch 14, nach der die mittlere Öltemperatur in einem Knoten unter Einbeziehung des Ölflusses ermittelt wird, wobei jener Ölfluss herangezogen wird, der bereits bei der Berechnung der mittleren Öltemperatur durch einen der einmündenden Zweige verwendet wurde.

Die Weiterbildung nach Anspruch 15 ist wegen der vielfach auftretenden nichtlinearen Zusammenhänge und der zum Teil von der Strömungsrichtung des Öles abhängigen Berechnungsmethode der einzelnen Temperaturen unbedingt erforderlich.

Vorteilhaft ist auch eine Ausbildung nach Anspruch 16, wobei eine Überprüfung des hydraulischen Netzwerkes durchgeführt wird.

Bei der Weiterbildung nach Anspruch 17 wird laufend der Strömungszustand, beschrieben durch die Zweiggrößen phz, der sich im hydraulischen Netzwerk aufgrund von transienten Vorgängen ändern kann, mitberechnet.

Von Vorteil ist auch eine Ausbildung nach Anspruch 18 mit der die treibenden Druckdifferenzen in den Strömungszweigen und daraus die Strömungsvektoren in den einzelnen Zweigen ermittelt werden. Die Strömung des Öles im hydraulischen Netzwerk wird bestimmt durch die hydraulischen Widerstände der einzelnen Strömungszweige, durch die Verteilung der Temperaturen des Öles und, sofern vorhanden, durch die Druck- und Strömungscharakteristik von Pumpen.

Die Weiterbildung nach Anspruch 19 ist notwendig, da die hydraulischen Widerstände nichtlinear sind.

Vorteilhaft ist auch eine Ausbildung nach Anspruch 20, durch welche die hydraulischen Widerstände in den Zweigen und Knoten des hydraulischen Netzwerkes bei der Ermittlung der Vektoren der Ölströmung in den Zweigen eingehen.

Die Ausgestaltung nach Anspruch 21 ermöglicht bei der Berechnung der ohmschen und der Wirbelstromverluste in einem verlusterzeugenden Teil bei gegebenem Wicklungsstrom und gegebener Streuflussverteilung auch die Einbeziehung der Temperatur dieses Teiles.

Gemäß Anspruch 22 wird die Temperaturabhängigkeit der Ölströmung im thermohydraulischen Modell berücksichtigt.

Anspruch 23 definiert eine Anordnung zur Durchführung des Verfahrens nach Anspruch 1.

Die Erfindung wird im Nachfolgenden anhand der in den Zeichnungen dargestellten Ausführungsbeispielen näher erläutert.

Es zeigen:

Fig. 1 die Struktur des thermohydraulischen Modells als Blockschaltbild
Fig. 2 die Struktur des hydraulischen Netzwerkes für das thermohydraulische Modell.

Einführend wird festgehalten, dass in den unterschiedlich beschriebenen Ausführungsbeispielen gleiche Teile mit gleichen Bezugszeichen bzw. mit gleichen Bauteilbezeichnungen versehen sind, wobei in der gesamten Beschreibung enthaltene Offenbarungen sinngemäß auf gleiche Teile mit gleichen Bezugszeichen bzw. gleichen Bauteilbeziechnungen übertragen werden können. Auch sind die in der Beschreibung gewählten Lageangaben, wie z. B. oben, unten, seitlich usw. auf die unmittelbar beschriebene sowie dargestellte Figur bezogen und sind bei einer Lageänderung sinngemäß auf die neue Lage zu übertragen.

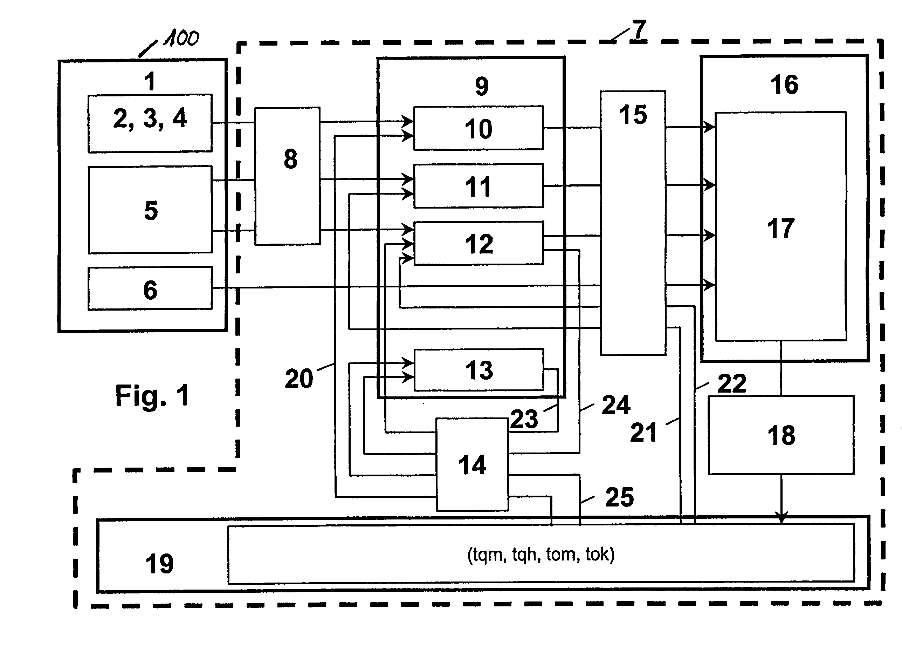

Bei Fig. 1 sind in einem Funktionsblock 100 die Eingabegrößen 1 als Block dargestellt, diese sind die Klemmenspannungen 2 am Transformator, die Ströme 3 in den Wicklungen, die Schalterstellungen 4 eines Stufenschalters, der Zustand bzw. Status 5 der Kühlaggregate und die Umgebungstemperatur 6 des Transformators. Der Zustand 5 der Kühlaggregate gibt an, wie viele und welche Lüfter in Betrieb sind, sowie deren Drehzahl, wie viele und welche Pumpen eingeschaltet sind und deren Leistungsaufnahme. Im thermohydraulischen Modell 7 bedeutet der Block 8 eine Initialisierung vor einem Neustart des Ablaufes im thermohydraulischen Modell 7, welche entweder bei einer Änderung der Spannung 2, des Stromes 3, der Schalterstellung 4 des Stufenschalters und/oder des Status 5 der Kühlaggregate oder in regelmäßigen Abständen erfolgt. Im Block 9 werden die Hilfsgrößen 9 ermittelt, welche die Verluste 10 im Transformatorkern, in den Wicklungen, in den Stahlbauteilen, wie Gehäuse, Pressbolzen, usw., die Parameter 11 für den Wärmeübergang, die Strömungswiderstände 13 im Ölkreislauf und die Ölströmung 12 selbst sind. Der Block 15 schematisiert die Berechnung der Differentialquotienten für die Temperaturen tqm, tqh, tom, tok. Der Block 16 - Zustandsgrößenänderung - beschreibt die differentielle Änderung der Temperaturen tqm, tqh, tom, tok. Die numerische Lösung der Differentialgleichungen stellt der Block 18 dar. Im Block 19 sind die Zustandsgrößen 19 der Temperaturen tqm, tqh, tom, tok abgespeichert. Der Block 14 repräsentiert eine laufende Parameteranpassung 14 über eine entsprechende Rückkopplung.

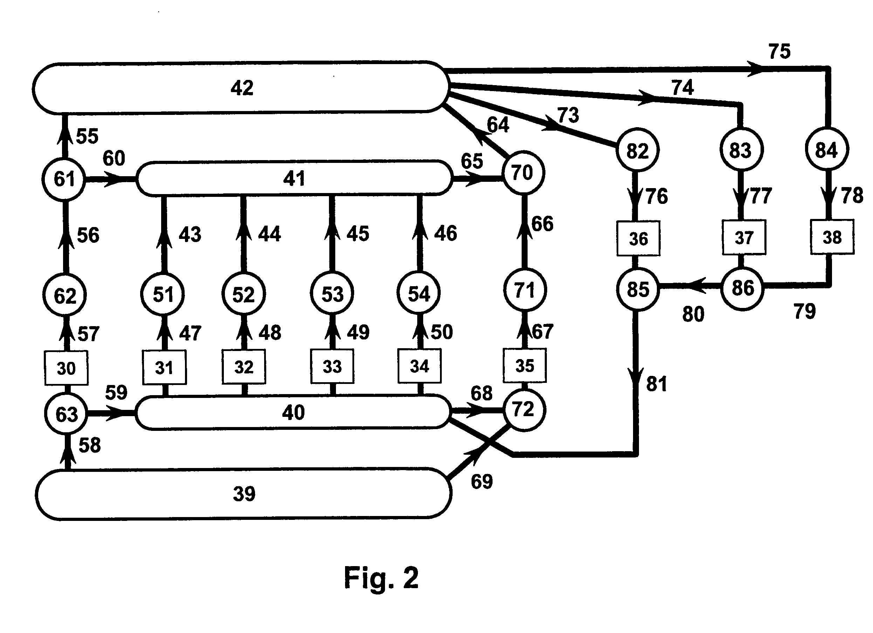

Die Rechtecke im hydraulischen Netzwerk des Transformators in Fig. 2 symbolisieren der Reihe nach den Transformatorkern 30, die Niederspannungswicklungen 31, die Stammwicklungen 32, die Grobstufenwicklungen 33, die Feinstufenwicklungen 34, den Transformatorkessel 35 und Kühler 36, 37, 38, insbesondere die Lüfter. Die Kreise und Langkreise sind die Knoten und die Verbindungen zwischen diesen sind die Zweige. Es befindet sich der Knoten 39 im Bodenteil des Transformatorkessels 35, der Knoten 40 an den unteren Enden der Wicklungen 31, 32, 33, 34, der Knoten 41 an deren oberen Wicklungsenden und der Knoten 42 im Kessel 35 oberhalb des Transformators. Die Zweige 43, 44, 45, 46, 47, 48, 49, 50 sind die Strömungen durch die Wicklungen 31, 32, 33, 34 mit den Sammel- und Verzweigungsknoten 51, 52, 53, 54. Der Transformatorkern 30 sowie auch der - kessel 35 sind ebenfalls in das hydraulische Netzwerk einbezogen, wobei für den Kern 30 die Zweige 55, 56, 57, 58, 59, 60 und die Knoten 61, 62, 63 und für den Kessel 35 die Zweige 64, 65, 66, 67, 68, 69 und die Knoten 70, 71, 72 vorgesehen sind. Weiters ist die Ölströmung zu und von den Kühlern 36, 37, 38 ebenfalls mit Zweigen 73, 74, 75, 76, 77, 78, 79, 80, 81 und Knoten 82, 83, 84, 85, 86 dargestellt.

Alle Datenwerte, die im thermohydraulischen Modell 7 verarbeitet werden, lassen sich in vier Kategorien einteilen:

1.) Eingabegrößen 1, welche unter anderem erfasste Messwerte 2, 3 sind
2.) Interne Hilfsgrößen 9
3.) Zustandsgrößen 19
Dies sind Temperaturen tqm, tqh, tom, tok, die den thermischen Zustand zu einem bestimmten Zeitpunkt vollständig beschreiben.
4.) Änderungen der Zustandsgrößen 16
Da das Verhalten des Modells 7 durch Differentialgleichungen beschrieben wird, spielen die Änderungen der Zustandsgrößen 19 bzw. deren Änderungsgeschwindigkeit eine wesentliche Rolle.

Die Eingabegrößen 1 sind unmittelbar von Sensoren gemessene Daten, die über Meßwertumsetzer in eine für das Computerprogramm, mit dem das Verfahren realisiert ist, lesbare Form gebracht werden. Dies sind Spannungen 2 an Transformatorklemmen, Ströme 3 in Wicklungen, Schalterstellungen 4 eines Stufenschalters, der Status 5 (ein/aus) von Pumpen und Lüftern und die Umgebungstemperatur 6.

Die Hilfsgrößen 9 werden zur Ermittlung des Temperaturverhaltens benötigt. Sie haben zum Teil zusätzlich auch informativen Wert für den Transformatorbetreiber. Diese Größen 9 werden aus den Eingabegrößen 1 aus dem momentanen Zustand und aus festen von der Geometrie und von Materialeigenschaften bestimmten Transformatordaten errechnet.

Die Zustandsgrößen 19 bzw. Zustandsgrößenänderungen 16 beschreiben den augenblicklichen Temperaturzustand des Transformators. Dies sind die Temperatur tqm, welche die mittlere Temperatur verlusterzeugender Teile, wie Kern, Wicklungen, usw., die Temperatur tqh, welche die Hotspot-Temperatur in verlusterzeugenden Teilen, die Temperatur tom, welche die mittlere Öltemperatur in den Zweigen z. B. 43, 44 des hydraulischen Netzwerkes und die Temperatur tok, welche die mittlere Öltemperatur in den Knoten z. B. 51, 52 des hydraulischen Netzwerkes ist. Diese Temperaturen tqm, tqh, tom, tok liegen zu jedem Zeitpunkt im Modell 7 vor. Die eigentliche Rechenarbeit im Modell 7 betrifft die Änderungen dieser Temperaturen tqm, tqh, tom, tok, daher liegt aus Sicht des Informationsflusses noch die Kategorie Zustandsgrößenänderung 16 zwischen den Hilfsgrößen 9 und den eigentlichen Zustandsgrößen 19.

Auch die Rechenarbeit innerhalb des Modells 7 ist in einzelne Kategorien unterteilt. Das primäre Unterscheidungsmerkmal ist die Häufigkeit, mit der ein bestimmter Algorithmus aktiviert wird. In der Struktur des thermohydraulischen Modells 7 in Fig. 1 ist diese Datenverarbeitung durch jene Rechtecke dargestellt, die von den Datenflüssen durchlaufen werden. Am wenigsten oft aufgerufen wird die Initialisierung 8. Eine Initialisierung 8 muß prinzipiell nur dann erfolgen, wenn sich irgend ein Wert der Eingabegrößen 1 signifikant ändert.

Praktisch geschieht eine Initialisierung immer am Anfang eines Rechenvorganges, der entweder in regelmäßigen Abständen oder durch die Änderung eines Eingabeparameters 2, 3, 4, 5, 6 ausgelöst wird. Während der Initialisierung 8 werden aus den Werten von Spannung 2 und Strom 3 die Basisparameter der Verluste 10 ermittelt, ebenso hat die Stellung 4 des Stufenschalters Einfluss auf die Verteilung der Verluste 10 auf die einzelnen Wicklungen 31, 32, 33, 34.

Eine Zu- oder Abschaltung von Lüftern oder Pumpen hat eine Änderung der Wärmeübergangsparameter 11 zur Folge, die ebenfalls im Rahmen der Initialisierung 8 berücksichtigt wird.

Eine weitere Kategorie bei der Rechenarbeit ist die laufende Anpassung 14 von Parametern. Fast alle wesentlichen Parameter des thermohydraulischen Modells 7 sind stark von der Temperatur tqm, tqh, tom, tok abhängig. Wenn sich die Temperatur tqm, tqh, tom, tok während eines Rechenvorganges ändert, müssen diese Parameter in regelmäßigen Abständen neu berechnet werden. Das betrifft vor allem Strömungswiderstände 13 und die Ölströmung 12, weiters auch die Verluste 10, da sowohl deren ohmscher als auch der Wirbelstromanteil von der Temperatur tqm, tqh, tom, tok abhängig ist. Dies ist durch Rückführungen 20, 21, 22, 23, 24, 25 in der Fig. 1 dargestellt.

Der zeitliche Abstand zwischen zwei Parameteranpassungen 14 ist einstellbar, wobei bei großen Systemen ein Kompromiss zwischen maximaler Genauigkeit und ausreichender Rechengeschwindigkeit zu finden ist.

Eine dritte Kategorie ist die Berechnung der Differentialquotienten 15 und die numerische Lösung der Differentialgleichungen 18. Das ist ein Simulationsprozess, der den höchsten Anteil an Rechenleistung erfordert. Hier wird in kleinen Zeitschritten, abhängig von den Zeitkonstanten des Modells 7, die zeitliche Änderung aller Zustandsgrößen 19, d. h. aller Temperaturen tqm, tqh, tom, tok im Transformator, errechnet.

Die Differentialquotienten ergeben sich aus den physikalischen Gesetzen der Wärmespeicherung und der Wärmeübertragung. Als mathematische Methode für die Lösung der Differentialgleichungen 18 wird ein bekanntes numerisches Verfahren eingesetzt, z. B. die Methode nach Runge-Kutta.

Die gemessenen Klemmenspannungen 2 werden benötigt, um über den magnetischen Hauptfluss den Anteil der Leerlaufverluste 10 in den einzelnen Teilen des Kerns 30 zu ermitteln. Dazu wird eine Zuordnungsmatrix verwendet, die den Zusammenhang zwischen den Klemmenspannungen 2 und dem magnetischen Fluss in den einzelnen Kernteilen beschreibt. Die Verluste 10 werden dann mit Hilfe einer durch wenige Parameter definierte Kennlinie in Abhängigkeit dieses Flusses ermittelt.

Die gemessenen Ströme 3 haben Einfluss auf den ohmschen Anteil der Wicklungsverluste, den Wirbelstromanteil der Wicklungsverluste, der bei der Betrachtung von Heißstellen wesentlich ist, und zusätzliche Streuverluste in inaktiven Teilen, wie Presskonstruktion und Kessel 35.

Bei der Erstellung des Modells 7 werden interne Wicklungszweige definiert, die über eine Strom-Zuordnungsmatrix mit den messbaren Klemmenströmen 3 verknüpft werden. Grundsätzlich muss bei der Ermittlung des Einflusses der Ströme 3 die gegenseitige Phasenlage der einzelnen Wicklungsströme berücksichtigt werden, was bedeutet, dass alle Ströme als Zeiger mit zwei Komponenten darzustellen sind. Das ist bei Transformatoren mit mehr als zwei Wicklungssystemen nicht trivial.

Für die ohmschen Verluste 10 wird für jeden internen Wicklungszweig der Betrag des zugehörigen Stromes ermittelt, mit dem dann über den entsprechenden ohmschen Widerstand die Verluste 10 berechnet werden.

Zur Ermittlung der Wirbelstromverluste in den Wicklungen 31, 32, 33, 34 als auch in den inaktiven Teile des Transformators muss zunächst die Verteilung des magnetischen Streuflusses aus der Verteilung der Ströme auf die einzelnen Wicklungen 31, 32, 33, 34 abgeleitet werden. Dies erfolgt mit sogenannten Streufluss-Matrizen, die sowohl für die axialen als auch die radialen Komponenten definiert werden müssen. Auch hier ist die Berücksichtigung der Phasenlage wesentlich, weswegen wieder die Zeigerdarstellung mit zwei Komponenten erforderlich ist.

Eine Streufluss-Matrix beschreibt den Zusammenhang zwischen den Strömen in internen Wicklungszweigen und die für die einzelnen verlusterzeugenden Zweige relevanten magnetischen Streuflüsse. Sind die Beträge dieser Streuflüsse bekannt, können über entsprechende Faktoren, die sich aus der Wicklungsgeometrie ergeben, die Komponenten der Wirbelstromverluste berechnet werden.

Die Schalterstellung 4 eines Stufenschalters kann grundsätzlich Einfluss auf die Verteilung des magnetischen Hauptflusses, die Verteilung der internen Ströme und auch auf die Werte der ohmschen Widerstände einzelner Wicklungszweige haben. Dieser Einfluss wird berücksichtigt, indem die entsprechenden Komponenten der oben beschriebenen Zuordnungsmatrizen schalterstellungsabhängig gemacht werden. Zur Berücksichtigung der Änderung ohmscher Widerstände müssen auch die entsprechenden Werte der ohmschen Wicklungswiderstände abhängig von der Schalterstellung sein. In der praktischen Abwicklung eines Initialisierungsvorganges 8 heißt das, dass bei jeder Änderung der Schalterstellung 4 die Elemente der Zuordnungsmatrix Klemmenspannung 2 - magnetischer Fluss, der Zuordnungsmatrix Klemmenströme 3 - interne Wicklungsströme und der ohmschen Wicklungswiderstände überprüft und gegebenenfalls geändert werden müssen, bevor die oben beschriebenen Rechenoperationen zur Verlustberechnung 10 durchgeführt werden.

Eine eingeschaltete Pumpe wird berücksichtigt, indem die entsprechende Pumpencharakteristik, das ist der Zusammenhang zwischen der Druckdifferenz zwischen Ein- und Ausgang der Pumpe und der Ölströmung durch die Pumpe, in das hydraulische Netzwerk zur Beschreibung der Ölströmung 12 bzw. φ bzw. phz eingebaut ist.

Das Zu- oder Abschalten eines Lüfters hat Einfluss auf einen der Parameter des Wärmeüberganges 11 zwischen Öl und Umgebung. Grundsätzlich enthält jeder Zweig z. B. 73, 76, 81 mit externer Kühlung eine Komponente, die vom Betriebszustand der Lüfter abhängig ist. Der entsprechende Zusammenhang wird durch eine Zuordnungsmatrix zwischen Lüftern und Kühlungszweigen z. B. 73, 76, 81 beschreiben.

Die Umgebungstemperatur 6, welche auch mehrere sein können, hat unmittelbar Einfluss auf den Wärmefluss zwischen einem Zweig z. B. 73, 76, 81 mit externer Kühlung und der Umgebung. Das ist aus der Differentialgleichung für die mittlere Temperatur tom des Öles in einem Zweig z. B. 73, 76, 81 zu ersehen, wo die Temperaturdifferenz $\vartheta$ zwischen mittlerer Öltemperatur im Zweig und Umgebungstemperatur unmittelbar in den Ausdruck eingeht.

In der kontinuierlichen Anpassung 14 von Rechenparametern werden im Wesentlichen zwei Abhängigkeiten von Hilfsgrößen 9 abgebildet, nämlich die Abhängigkeit der Verluste 10 und der Ölströmung 12 von der Temperatur tqm, tqh, tom, tok. Dies ist durch die Rückführungen 20 und 22 in Fig. 1 dargestellt. Zusätzlich wird das nichtlineare Verhalten der Ölströmung 12 bzw. $\varphi$ bzw. phz hinsichtlich Druckabfall und Strömungsgeschwindigkeit durch eine entsprechende Rückkopplung 23, 24 von der Ölströmung 12 auf die Hilfsgröße 9 hydraulische Strömungswiderstände 13 nachgebildet.

Sowohl die ohmschen als auch die Wirbelstromverluste sind bei gegebenem Wicklungsstrom und gegebener Streuflussverteilung von der Temperatur tqm, tqh, tom, tok der Verlustquelle abhängig. In beiden Fällen ist die Ursache die Temperaturabhängigkeit des spezifischen Widerstandes des Leitermaterials, der normalerweise mit zunehmender Temperatur ebenfalls zunimmt. Für die ohmschen Verluste heißt das, dass sie mit zunehmender Temperatur tqm zunehmen, während die Wirbelstromverluste mit zunehmender Temperatur tqm abnehmen. In einer Rückführung 20 der Zustandsgrößen 19 Temperatur tqm, tqh, tok auf die Hilfsgrößen 9 Verluste 10 wird diese Abhängigkeit berücksichtigt.

Die Strömung 12 bzw. $\varphi$ bzw. phz des Öles in einem gegebenen hydraulischen Netzwerk wird bestimmt durch die hydraulischen Widerstände 13 der einzelnen Strömungszweige z. B. 43, 44, durch die Verteilung der Temperaturen des Öles, und soferne vorhanden durch die Druck-/Strömungscharakteristik von Pumpen.

Im thermohydraulischen Modell 7 erfolgt dies konkret durch die folgende Methode: Im ersten Schritt wird für jeden Strömungszweig z. B. 43, 44 eine virtuelle treibende Druckdifferenz f ermittelt. Mit dem ermittelten Vektor f der treibenden Druckdifferenzen wird dann mit einer Matrizengleichung der Vektor $\varphi$ bzw. phz der Strömung in den einzelnen Zweigen z. B. 43, 44 berechnet. Die Matrix zur Berechnung des Vektors $\varphi$ bzw. phz enthält die Information über die hydraulischen Widerstände 13 aller Zweige z. B. 43, 44 und über die Struktur des hydraulischen Netzwerkes.

Es gibt unterschiedliche Typen für hydraulische Widerstände, abhängig von der konkreten Geometrie. So haben z. B. Rohrleitungen eine andere Charakteristik als Strömungsverzweigungen oder Umlenkungen. Unabhängig davon gilt in vielen Fällen, dass der hydraulische Widerstand 13 abhängig von der Strömungsgeschwindigkeit ist. Das bedeutet, dass das Ergebnis der Auswertung der Matrizengleichung zur Berechnung des Vektors $\varphi$ bzw. phz der Strömung, Einfluss auf die dabei verwendete Matrix hat, da darin die Momentanwerte der hydraulischen Widerstände 13 stecken. In weiterer Folge heißt das, dass die Ermittlung der Ölströmungen $\varphi$ bzw. phz in einem iterativen Prozeß erfolgen muss. Ausgehend von einem Anfangswert $\varphi_0$ für den Vektor $\varphi$ werden hydraulische Widerstände 13 berechnet und damit ein neuer Vektor $\varphi_1$. Die Differenz zwischen $\varphi_0$ und $\varphi_1$ wird dazu benutzt, einen neuen, verbesserten Wert für $\varphi$ zu berechnen. Dieses Verfahren wird solange fortgesetzt, bis Ausgangswert und Ergebnis mit ausreichender Genauigkeit übereinstimmen.

Die Gesamtheit aller Ölströmungen, dargestellt durch den Vektor $\varphi$, ist in zweifacher Weise temperaturabhängig:

1.) Im Ausdruck für die treibende Druckdifferenz f ist unmittelbar die mittlere Temperatur T bzw. tom des Kühlmediums im Strömungszweig z. B. 43, 44 enthalten.

2.) Die Viskosität von Öl, und damit der hydraulische Widerstand 13 eines Strömungszweiges z. B. 43, 44, ist sehr stark von der Temperatur abhängig.

In Form einer geeigneten Rückführung 25 der Zustandsgrößen Temperatur tom, tok auf die hydraulischen Widerstände 13 bzw. die Ölströmung 12 sind die beiden obigen Gesetzmäßigkeiten im thermohydraulischen Modell 7 enthalten.

Dieses Verfahren zur Ermittlung von Temperaturen und Temperaturänderungen in einem ölgekühlten Transformator, der meistens ein Drehstromtransformator ist, ist ein wesentlicher Teil eines "Transformator-Monitoring"-Systems.

## Patentansprüche

1. Verfahren zur Ermittlung von Zustandsgrößen eines ölgekühlten Transformators, welche den augenblicklichen Temperaturzustand des Transformators beschreiben, umfassend:

   a.messen von Eingabegrößen (1),

b. erfassen eines Zustandes oder Status (5) von Kühlaggregaten, die an den Transformator angeschlossen sind,

c. einspeisen der gemessenen Eingabegrößen (1) und des Zustandes oder des Status (5) der Kühlaggregate in ein thermohydraulisches Modell (7),

d. berechnen von Zustandsgrößen (19) in dem thermohydraulischen Modell (7) mit Hilfsgrößen (9), wobei eine Temperaturabhängigkeit von Hilfsgrößen berücksichtigt wird,

**dadurch gekennzeichnet, dass**

e. das thermohydraulische Modell (7) ein hydraulisches Netzwerk des Ölkreislaufs des Transformators umfasst, welches Zweige (43, 44, 45, 46, 47, 48, 49, 50, 55, 56, 57, 58, 59, 60, 64, 65, 66, 67, 68, 69, 73, 74, 75, 76, 77, 78, 79, 80, 81) und Knoten (39, 40, 41, 42, 51, 52, 53, 54, 61, 62, 63, 70, 71, 72, 82, 83, 84, 85, 86) aufweist,

f. bei einer Änderung der Eingabegrößen (1) und/oder des Status (5) der Kühlaggregate und/oder einer Schalterstellung (4) eines Stufenschalters werden die Hilfsgrößen entsprechend angepasst, anschließend eine Änderungsgeschwindigkeit der Zustandsgrößen (19) und damit neue Zustandsgrößen (19) berechnet.

2. Verfahren nach Anspruch 1, **dadurch gekennzeichnet, dass** die Änderungsgeschwindigkeit der Zustandsgrößen (19) und die Zustandsgrößen (19) mit Differentialgleichungen berechnet werden.

3. Verfahren nach Anspruch 1 oder 2, **dadurch gekennzeichnet, dass** mit den gemessenen Sapnnungen (2) durch eine Zuordnungsmatrix der Zusammenhang zwischen diesen Spannungen (2) und dem magnetischen Fluss in den einzelnen Kernteilen des Transformators ermittelt wird, und dass anschließend mit einer durch Parameter definierten Kennlinie in Abhängigkeit dieses magnetischen Flusses die Leerlaufverluste ermittelt werden.

4. Verfahren nach einem der Ansprüche 1 bis 3, **dadurch gekennzeichnet, dass** transformatorinterne Wicklungszweige definiert werden, die über eine Strom-Zuordnungsmatrix mit den gemessenen Strömen (3), vorzugsweise den Klemmenströmen, verknüpft werden, wobei wegen der Notwendigkeit die Phasenlage zu berücksichtigen alle Ströme (3) als Zeiger mit zwei Komponenten dargestellt werden, und dass für jeden internen Wicklungszweig der Betrag des Stromes ermittelt wird, mit dem über den entsprechenden Widerstand die ohmschen Verluste berechnet werden, und dass mit Matrizen, welche sowohl für axiale als auch für radiale Komponenten definiert werden, aus der Verteilung der Ströme (3) auf die einzelnen Wicklungen (31, 32, 33, 34) die Verteilung des magnetischen Streuflusses und daraus die Wirbelstromverluste in den Wicklungen (31, 32, 33, 34) und den inaktiven Teilen des Transformators ermittelt werden, und dass durch eine Matrix der Zusammenhang zwischen den Strömen in Wicklungszweigen und dem für die verlusterzeugenden Zweige relevanten magnetischen Streufluss ermittelt wird, und mit Faktoren, die aus der Wicklungsgeometrie ermittelt werden, die Wirbelstromverluste berechnet werden.

5. Verfahren nach Ansprüchen 3, und 4, **dadurch gekennzeichnet, dass** die Matrizen und die relevante Zuordnungsmatrix und ohmschen Wicklungswiderstände schalterstellungsabhängig ausgeführt sind.

6. Verfahren nach einem der Ansprüche 1 bis 5, **dadurch gekennzeichnet, dass** bei jeder Änderung der Schalterstellung (4) des Stufenschalters ein Initialisierungsvorgang (8) durchgeführt wird, wobei die Zuordnungsmatrix Spannung - magnetischer Fluss, die Matrix Ströme - interne Wicklungsströme und die ohmschen Wicklungswiderstände überprüft und gegebenenfalls geändert werden.

7. Verfahren nach einem der Ansprüche 1 bis 6, **dadurch gekennzeichnet, dass** der Status (5) der Kühlaggregate auf mindestens einen der Parameter des Wärmeüberganges (11) zwischen Öl und Umgebung einfließt und der entsprechende Zusammenhang zwischen Lüftern (36, 37, 38) und Kühlungszweigen (73, 74, 75, 76, 77, 78, 79, 80, 81) in einer Zuordnungsmatrix ausgedrückt wird.

8. Verfahren nach einem der Ansprüche 1 bis 7, **dadurch gekennzeichnet, dass** die mittleren Temperaturen in verlusterzeugenden Transformatorteilen mit der Differentialgleichung

$$\frac{d}{dt}\,tqm = \frac{V_{ges} - wim}{cqg}$$

berechnet wird, wobei

tqm (°C) die mittlere Temperatur eines verlusterzeugenden Transformatorteiles, $V_{ges}$ (kW) die Gesamtverluste des verlusterzeugenden Transformatorteiles,

cqg (kWmin/K) die Wärmekapazität des verlusterzeugenden Transformatorteiles und wim (kW) die von dem verlusterzeugenden Transformatorteil an das vorbeiströmende Öl abgegebene Verlustleistung ist.

9. Verfahren nach Anspruch 8, **dadurch gekennzeichnet, dass** die an das vorbeiströmende Öl abgegebene Verlustleistung wim mit der Formel

$$wim = V0g \cdot \left(\frac{g}{g0}\right)^{xg}$$

berechnet wird, wobei
V0g (kW) Referenzverluste sind,
g (K) die Differenz zwischen der mittleren Temperatur des verlusterzeugenden Transformatorteiles und der mittleren Temperatur des anliegenden Öles, als mittlerer Sprung bezeichnet,
g0 der mittlere Sprung bei stationärem Zustand und den Referenzverlusten und xg der Exponent für Wärmeübergang zwischen dem verlusterzeugenden Transformatorteil und dem Öl, in Abhängigkeit von Öltemperatur und Ölgeschwindigkeit, ist.

10. Verfahren nach einem der Ansprüche 1 bis 9, **dadurch gekennzeichnet, dass** die Hotspot-Temperaturen in verlusterzeugenden Transformatorteilen mit der Differentialgleichung

$$\frac{d}{dt}tqh = \frac{V_{hot} - wih}{cqh}$$

berechnet wird, wobei
tqh (°C) die Hotspot-Temperatur eines verlusterzeugenden Transformatorteiles, $V_{hot}$ (kW) die mit einem "Hotspot-Faktor" multiplizierten Gesamtverluste des verlusterzeugenden Transformatorteiles,
cqh (kWmin/K) die Wärmekapazität des verlusterzeugenden Transformatorteiles umgerechnet auf die Verhältnisse an der Stelle der maximalen Temperatur und wih (kW) die von der heißesten Stelle des verlusterzeugenden Transformatorteiles an das vorbeiströmende Öl abgegebene Verlustleistung ist.

11. Verfahren nach Anspruch 10, **dadurch gekennzeichnet, dass** die von einer Heißstelle an das vorbeiströmende Öl abgegebene Verlustleistung wih mit der Formel

$$wih = V0h \cdot \left(\frac{h}{h0}\right)^{xh}$$

berechnet wird, wobei
V0h (kW) Referenzverluste für die Heißstelle sind,
h (K) die Differenz zwischen der maximalen Temperatur des verlusterzeugenden Transformatorteiles und der Öltemperatur an der heißesten Stelle des Transformatorteiles, als Hotspot-Sprung bezeichnet,
h0 der Hotspot-Sprung bei stationärem Zustand und den Referenzverlusten für die Heißstelle und
xh der Exponent für Wärmeübergang zwischen dem verlusterzeugenden Transformatorteil und dem Öl, in Abhängigkeit von Öltemperatur und Ölgeschwindigkeit, ist.

12. Verfahren nach einem der Ansprüche 1 bis 11, **dadurch gekennzeichnet, dass** die mittleren Öltemperaturen in Zweigen (43, 44, 45, 46, 47, 48, 49, 50, 55, 56, 57, 58, 59, 60, 64, 65, 66, 67, 68, 69, 73, 74, 75, 76, 77, 78, 79, 80, 81) des hydraulischen Netzwerkes des Ölkreislaufes mit der Differentialgleichung

$$\frac{d}{dt}\,tom = \frac{wim - wam - phz \cdot D}{coel_z}$$

berechnet wird, wobei

tom (°C) die mittlere Öltemperatur in einem Ölströmungszweig,

wim (kW) die von dem verlusterzeugenden Transformatorteil an das vorbeiströmende Öl abgegebene Verlustleistung,

wam (kW) die von einem Zweig an die Umgebung abgegebene Wärmeleistung, phz (kW/K) der Ölfluss durch den Zweig, ausgedrückt in transponierte Wärmeleistung je Grad Temperaturdifferenz zwischen der Öltemperatur von Zweiganfang und Zweigende,

D (K) die Temperaturdifferenz zwischen der Öltemperatur von Zweiganfang und Zweigende und

$coel_z$ (kWmin/k) die Wärmekapazität des Öles im Strömungszweig ist.

13. Verfahren nach Anspruch 12, **dadurch gekennzeichnet, dass** die von einem Zweig (43, 44, 45, 46, 47, 48, 49, 50, 55, 56, 57, 58, 59, 60, 64, 65, 66, 67, 68, 69, 73, 74, 75, 76, 77, 78, 79, 80, 81) an die Umgebung abgegebene Wärmeleistung wam mit der Formel

$$wam = wam0 \cdot \left(\frac{\vartheta}{\vartheta_0}\right)^{x\vartheta} \cdot fup - VK - sun$$

berechnet wird, wobei

wam0 (kW) der Referenzwert der abgegebenen Wärmeleistung ist,

$\vartheta$ (K) die Temperaturdifferenz zwischen der mittleren Öltemperatur im Zweig und der Umgebungstemperatur,

$\vartheta_0$ (K) der Referenzwert für die Temperaturdifferenz $\vartheta$, für den der Wert wam0 definiert ist,

$x\vartheta$ der Exponent für den Wärmeübergang zwischen dem Öl und der Umgebung, in Abhängigkeit von der Kühlungsart,

fup ein Faktor für den Einfluss der Umgebungstemperatur (6) und gegebenenfalls des Luftdruckes,

VK (kW) die Streuverlustleistung im Kessel, und gegebenenfalls eines Kühlerzweiges, der eine Kesseloberfläche darstellt, und

sun (kW) die Leistung der Sonneneinstrahlung ist.

14. Verfahren nach einem der Ansprüche 1 bis 13, **dadurch gekennzeichnet, dass** die mittleren Öltemperaturen in Knoten (39, 40, 41, 42, 51, 52, 53, 54, 61, 62, 63, 70, 71, 72, 82, 83, 84, 85, 86) des hydraulischen Netzwerkes des Ölkreislaufes mit der Differentialgleichung

$$\frac{d}{dt}\,tok = \frac{\sum_{i=1}^{n_z} phz \cdot T_{eff}}{coel_K}$$

berechnet wird, wobei

tok (°C) die mittlere Öltemperatur in einem Knoten,

$n_z$ die Anzahl der Zweige, die an diesem Knoten einmünden, phz (kW/K) der Ölfluss (12) durch einen der einmündenden Zweige,

$T_{eff}$ (°C) die Temperatur des Öles an dem mit dem Knoten verbundenen Ende des Zweiges, welche wesentlich von der Strömungsrichtung abhängig ist, und

$coel_K$ (kWmin/k) die Wärmekapazität des Öles in diesem Knoten ist.

15. Verfahren nach einem der Ansprüche 1 bis 14, **dadurch gekennzeichnet, dass** die Differentialgleichungen mit einem bekannten numerischen Verfahren, z. B. der Methode nach Runge-Kutta, gelöst werden.

**16.** Verfahren nach einem der Ansprüche 1 bis 15, **dadurch gekennzeichnet, dass** den Zweigen (43, 44, 45, 46, 47, 48, 49, 50, 55, 56, 57, 58, 59, 60, 64, 65, 66, 67, 68, 69, 73, 74, 75, 76, 77, 78, 79, 80, 81) und auch den Knoten (39, 40, 41, 42, 51, 52, 53, 54, 61, 62, 63, 70, 71, 72, 82, 83, 84, 85, 86) ein bestimmtes Ölvolumen zugeordnet wird, welches in der Summe dem Gesamt-Ölvolumen entspricht.

**17.** Verfahren nach einem der Ansprüche 1 bis 16, **dadurch gekennzeichnet, dass** bei der Lösung der Differentialgleichungen für die mittleren Öltemperaturen (tom) in den Zweigen (43, 44, 45, 46, 47, 48, 49, 50, 55, 56, 57, 58, 59, 60, 64, 65, 66, 67, 68, 69, 73, 74, 75, 76, 77, 78, 79, 80, 81) und in den Knoten (39, 40, 41, 42, 51, 52, 53, 54, 61, 62, 63, 70, 71, 72, 82, 83, 84, 85, 86) des hydraulischen Netzwerkes des Ölkreislaufes kontinuierlich der Strömungszustand durch ein Gleichungssystem für die Druckabfälle in allen Zweigen (43, 44, 45, 46, 47, 48, 49, 50, 55, 56, 57, 58, 59, 60, 64, 65, 66, 67, 68, 69, 73, 74, 75, 76, 77, 78, 79, 80, 81) des gesamten hydraulischen Netzwerkes mitberechnet wird.

**18.** Verfahren nach einem der Ansprüche 1 bis 17, **dadurch gekennzeichnet, dass** für jeden Zweig (43, 44, 45, 46, 47, 48, 49, 50, 55, 56, 57, 58, 59, 60, 64, 65, 66, 67, 68, 69, 73, 74, 75, 76, 77, 78, 79, 80, 81) im hydraulischen Netzwerk der Vektor für eine virtuelle treibende Druckdifferenz f

$$f = g \cdot \rho \cdot \beta \cdot \Delta H \cdot T + pd$$

ermittelt wird, wobei
$f$ (N/m$^2$) die treibende Druckdifferenz,
$g$ (m/s$^2$) die Erdbeschleunigung,
$p$ (kg/m$^2$) die Dichte des Öles,
$\beta$ der Ausdehnungskoeffizient des Öles
$\Delta H$ (m) die Höhendifferenz zwischen Anfangs- und Endpunkt des Zweiges
$T$ (°C) die mittlere Temperatur des Öles im Zweig und
$pd$ (N/m$^2$), soferne vorhanden, die durch eine Pumpe verursachte Druckdifferenz im Zweig ist, und dass mit der Matrizengleichung

$$\varphi = TTRTT \cdot f$$

der Vektor $\varphi$ der Ölströmung (12) in den einzelnen Zweigen (43, 44, 45, 46, 47, 48, 49, 50, 55, 56, 57, 58, 59, 60, 64, 65, 66, 67, 68, 69, 73, 74, 75, 76, 77, 78, 79, 80, 81) berechnet wird, wobei TTRTT eine Matrix ist, welche die Information über die hydraulischen Widerstände (13) in allen Zweigen (43, 44, 45, 46, 47, 48, 49, 50, 55, 56, 57, 58, 59, 60, 64, 65, 66, 67, 68, 69, 73, 74, 75, 76, 77, 78, 79, 80, 81) und über die Struktur des hydraulischen Netzwerkes enthält.

**19.** Verfahren nach einem der Ansprüche 1 bis 18, **dadurch gekennzeichnet, dass** die Vektoren $\varphi$ der Ölströmung (12) in einem iterativen Prozess ermittelt werden, wobei dieser Prozess solange fortgesetzt wird, bis Ausgangswert und Ergebnis mit ausreichender Genauigkeit übereinstimmen.

**20.** Verfahren nach einem der Ansprüche 1 bis 19, **dadurch gekennzeichnet, dass** eine laufende Anpassung von Parametern mit zwei Hilfsgrößen (9) durchgeführt wird, wobei eine Hilfsgröße (9) die Abhängigkeit der Verluste (10) von der Temperatur (tqm, tqh, tom, tok) und die zweite Hilfsgröße (9) die Abhängigkeit der Ölströmung (12) von der Temperatur (tqm, tqh, tom, tok) berücksichtigt, und dass das nichtlineare Verhalten der Ölströmung (12) hinsichtlich Druckabfall und Strömungsgeschwindigkeit durch eine Rückkopplung (23, 24) von der Ölströmung (12) über die hydraulischen Widerstände (13) nachgebildet wird.

**21.** Verfahren nach einem der Ansprüche 1 bis 20, **dadurch gekennzeichnet**, das in einer Rückführung (20) der Zustandsgrößen (19) Temperaturen (tqm, tqh, tom, tok) auf die Hilfsgrößen Verluste (10) die Temperaturabhängigkeit des spezifischen Widerstandes des Leitermaterials berücksichtigt wird.

**22.** Verfahren nach einem der Ansprüche 1 bis 21, **dadurch gekennzeichnet, dass** im thermohydraulischen Modell (7) eine Rückkopplung (22, 25) der Zustandsgrößen (19) Temperaturen (tqm, tqh, tom, tok) auf die hydraulischen Widerstände (13) bzw. auf die Ölströmung (12) durchgeführt wird, wobei die Gesamtheit aller Ölströmungen (12), repräsentiert durch den Vektor φ, in zweifacher Weise temperaturabhängig sind, nämlich einerseits von der treibenden Druckdifferenz und andererseits von der Viskosität des Öles und damit der hydraulischen Widerstände (13).

**23.** Anordnung zur Durchführung des Verfahrens zur Ermittlung von Zustandsgrößen eines ölgekühlten Transformators, welche den augenblicklichen Temperaturzustand des Transformators beschreiben, umfassend:

a) einen Funktionsblock (100) zum Messen von Eingabegrößen (1) und zum Erfassen eines Zustandes oder eines Status (5) von Kühlaggregaten, die an den Transformator angeschlossen sind,
b) ein thermohydraulisches Modell (7), dem die gemessenen Eingabegrößen (1) und der Zustand oder der Status (5) der Kühlaggregate zugeführt sind, welches Zustandsgrößen (19) mit Hilfsgrößen (9) berechnet, wobei eine Temperaturabhängigkeit von Hilfsgrößen berücksichtigt wird,
**dadurch gekennzeichnet, dass**
c) das thermohydraulische Modell (7) ein hydraulisches Netzwerk des Ölkreislaufs des Transformators umfasst, welches Zweige (43, 44, 45, 46, 47, 48, 49, 50, 55, 56, 57, 58, 59, 60, 64, 65, 66, 67, 68, 69, 73, 74, 75, 76, 77, 78, 79, 80, 81) und Knoten (39, 40, 41, 42, 51, 52, 53, 54, 61, 62, 63, 70, 71, 72, 82, 83, 84, 85, 86) aufweist, wobei bei einer Änderung der Eingabegrößen (1) und/oder des Status (5) der Kühlaggregate und/oder einer Schalterstellung (4) eines Stufenschalters die Hilfsgrößen entsprechend angepasst werden, anschließend eine Änderungsgeschwindigkeit der Zustandsgrößen (19) und damit neue Zustandsgrößen (19) berechnet werden.

### Claims

**1.** Method for determining state variables of an oil-cooled transformer, which describe the instantaneous temperature state of the transformer, comprising:

(a) measuring input variables (1)
(b) acquiring a state or status (5) from coolers which are connected to the transformer,
(c) feeding the measured input variables (1) and the state or the status (5) of the coolers into a thermohydraulic model (7), and
(d) calculating state variables (19) in the thermohydraulic model (7) with the aid of auxiliary variables (9), account being taken of a temperature-dependence of auxiliary variables,
**characterized in that**
(e) the thermohydraulic model (7) comprises a hydraulic network of the oil circulation of the transformer which has branches (43, 44, 45, 46, 47, 48, 49, 50, 55, 56, 57, 58, 59, 60, 64, 65, 66, 67, 68, 69, 73, 74, 75, 76, 77, 78, 79, 80, 81) and nodes (39, 40, 41, 42, 51, 52, 53, 54, 61, 62, 63, 70, 71, 72, 82, 83, 84, 85, 86), and
(f) the auxiliary variables are appropriately adapted in the event of a change in the input variables (1) and/or the status (5) of the coolers and/or a switch position (4) of a stepping switch, and subsequently the rate of change of the state variables (19) and thus new state variables (19) are calculated.

**2.** Method according to Claim 1, **characterized in that** the rate of change of the state variables (19) and the state variables (19) are calculated using differential equations.

**3.** Method according to Claim 1 or 2, **characterized in that** with the aid of the measured voltages (2) an assignment matrix determines the connection between these voltages (2) and the magnetic flux in the individual core parts of the transformer, and **in that** the no-load losses are subsequently determined with the aid of the characteristic curve, defined by parameters, as a function of this magnetic flux.

**4.** Method according to one of Claims 1 to 3, **characterized in that** internal transformer winding branches are defined which are linked via a current assignment matrix to the measured currents (3), preferably the terminal currents, all currents (3) being represented as phasors with two components because of the necessity to take account of the phase angle, **in that** for each internal winding branch the absolute value of the current is determined with which the ohmic losses are calculated via the corresponding resistances, **in that** with the aid of matrices which are defined both for axial and for radial components the distribution of the magnetic dispersion is determined from the distribution of the currents (3) of the individual windings (31, 32, 33, 34), and the eddy current losses in the windings (31, 32, 33, 34) and the inactive parts of the transformer are determined therefrom, and **in that** a matrix is used to determine the relationship between the currents in winding branches and the magnetic dispersion relevant to the loss-producing branches, and the eddy current losses are calculated with the aid of factors which are determined from the winding geometry.

**5.** Method according to Claims 3 and 4, **characterized in that** the matrices and the relevant assignment matrix and ohmic winding resistances are designed as a function of switch position.

**6.** Method according to one of Claims 1 to 5, **characterized in that** an initialisation process (8) is carried out for each change of the switch position (4) of the stepping switch, voltage - magnetic flux - being checked by the assignment matrix, and currents - internal winding currents and the ohmic winding resistances - being checked by the matrix, and being changed, if appropriate.

**7.** Method according to one of Claims 1 to 6, **characterized in that** the status (5) of the coolers influences at least one of the parameters of the heat transfer (11) between oil and surroundings, and the corresponding relationship between fans (36, 37, 38) and cooling branches (73, 74, 75, 76, 77, 78, 79, 80, 81) is expressed in an assignment matrix.

**8.** Method according to one of Claims 1 to 7, **characterized in that** the mean temperatures in loss-producing transformer parts are calculated with the aid of the differential equation

$$\frac{d}{dt} tqm = \frac{V_{ges} - wim}{cqg},$$

tqm (°C) being the mean temperature of a loss-producing transformer part,
$V_{ges}$(kW) being the total losses of the loss-producing transformer part,
cqg (kWmin/K) being the thermal capacity of the loss-producing transformer part, and
wim (kW) being the power loss dissipated from the loss-producing transformer part to the oil flowing past.

**9.** Method according to Claim 8, **characterized in that** the power loss wim output to the oil flowing past is calculated with the aid of the formula

$$wim = V0g \cdot \left(\frac{g}{g0}\right)^{xg},$$

V0g(kW) being reference losses,
g(K) being the difference between the mean temperature of the loss-producing transformer part and the mean temperature of the adjacent oil, denoted as mean jump,
g0 being the mean jump for a stationary state and the reference losses, and
xg being the exponent for heat transfer between the loss-producing transformer part and the oil, as a function of oil temperature and oil speed.

**10.** Method according to one of Claims 1 to 9, **characterized in that** the hotspot temperatures in loss-producing transformer parts are calculated with the aid of the differential equation

$$\frac{d}{dt} tqh = \frac{V_{hot} - wih}{cqh}$$

tqh (°C) being the hotspot temperature of a loss-producing transformer part,
$V_{hot}$(kW) being the losses of the loss-producing transformer part multiplied by a "hotspot factor",
cqh (kWmin/K) being the thermal capacity of the loss-producing transformer part converted to the conditions at the point of maximum temperature, and

with (kW) being the power loss dissipated from the hottest point of the loss-producing transformer part to the oil flowing past.

11. Method according to Claim 10, **characterized in that** the power loss wih dissipated from a hot point on the oil flowing past is calculated with the aid of the formula

$$\mathtt{wih} \;=\; \mathtt{V0h.} \; \left(\frac{h}{h0}\right)^{xh}$$

V0h (kW) being reference losses for the hot point,
h(K) being the difference between the maximum temperature of the loss-producing transformer part and the oil temperature at the hottest point of the transformer part, denoted as hotspot jump,
h0 being the hotspot jump for a stationary state and the reference losses for the hot point, and
xh being the exponent for a transfer between the loss-producing transformer part and the oil, as a function of oil temperature and oil speed.

12. Method according to one of Claims 1 to 11, **characterized in that** the mean oil temperatures in branches (43, 44, 45, 46, 47, 48, 49, 50, 55, 56, 57, 58, 59, 60, 64, 65, 66, 67, 68, 69, 73, 74, 75, 76, 77, 78, 79, 80, 81) of the hydraulic network of the oil circulation are calculated with the aid of the differential equation

$$\frac{\mathrm{d}}{\mathrm{d}t}\,\mathrm{tom} = \frac{\mathrm{wim} - \mathrm{wam} - \mathrm{phz}\cdot\mathrm{D}}{\mathrm{coel}_{z}}$$

tom(°C) being the mean oil temperature in an oil flow branch,
wim (kW) being the power loss dissipated from the loss-producing transformer part to the oil flowing past,
wam (kW) being the heat output dissipated from a branch to the surroundings,
phz (kW/K) being the oil flow through the branch, expressed in transposed heat output per degree of temperature difference between the oil temperature of branch beginning and branch end,
D (K) being the temperature difference between the oil temperature of the branch beginning and branch end, and
coel$_z$(kWmin/k) being the thermal capacity of the oil in the flow branch.

13. Method according to Claim 12, **characterized in that** the heat output wam dissipated to the surroundings from a branch (43, 44, 45, 46, 47, 48, 49, 50, 55, 56, 57, 58, 59, 60, 64, 65, 66, 67, 68, 69, 73, 74, 75, 76, 77, 78, 79, 80, 81) is calculated with the aid of the formula

$$\mathrm{wam} = \mathrm{wam0}\cdot\left(\frac{\vartheta}{\vartheta_{0}}\right)^{x\vartheta}\cdot\mathrm{fup} - \mathrm{VK} - \mathrm{sun}$$

wam0(kW) being the reference value of the dissipated heat output,
$\vartheta$ (K) being the temperature difference between the mean oil temperature in the branch and the ambient temperature,
$\vartheta_0$(K) being the reference value for the temperature difference $\vartheta$, for which the value wam0 is defined,
x $\vartheta$ being the exponent for the heat transfer between the oil and the surroundings, as a function of the type of cooling,
fup being a factor for the influence of the ambient temperature (6) and, if appropriate, the air pressure,
VK (kW) being the scattering power loss in the boiler and, if appropriate, of a cooler branch that constitutes a boiler surface, and
sun(kW) being the power of the insolation.

14. Method according to one of Claims 1 to 13, **characterized in that** the mean oil temperatures in nodes (39, 40, 41, 42, 51, 52, 53, 54, 61, 62, 63, 70, 71, 72, 82, 83, 84, 85, 86) of the hydraulic network of the oil circulation is calculated with the aid of the differential equation

$$\frac{d}{dt}\,tok = \frac{\sum_{i=1}^{n_z} phz \cdot T_{eff}}{coel_K}$$

$tok(°C)$ being the mean oil temperature in a node,
$n_z$ being the number of the branches that discharge at this node,
$phz(kW/K)$ being oil flow (12) through one of the discharging branches,
$T_{eff}(°C)$ being the temperature of the oil at the end, connected to the node, of the branch which is a function of the flow direction, and
$coel_K(kWmin/k)$ being the thermal capacity of the oil in this node.

**15.** Method according to one of Claims 1 to 14, **characterized in that** the differential equations are solved using a known numerical method, for example the Runge-Kutta method.

**16.** Method according to one of Claims 1 to 15, **characterized in that** the branches (43, 44, 45, 46, 47, 48, 49, 50, 55, 56, 57, 58, 59, 60, 64, 65, 66, 67, 68, 69, 73, 74, 75, 76, 77, 78, 79, 80, 81) and also the nodes (39, 40, 41, 42, 51, 52, 53, 54, 61, 62, 63, 70, 71, 72, 82, 83, 84, 85, 86) are assigned a specific oil volume which corresponds in sum to the total oil volume.

**17.** Method according to one of Claims 1 to 16, **characterized in that** in the course of solving the differential equations for the mean oil temperatures (tom) in the branches (43, 44, 45, 46, 47, 48, 49, 50, 55, 56, 57, 58, 59, 60, 64, 65, 66, 67, 68, 69, 73, 74, 75, 76, 77, 78, 79, 80, 81) and in the nodes (39, 40, 41, 42, 51, 52, 53, 54, 61, 62, 63, 70, 71, 72, 82, 83, 84, 85, 86) of the hydraulic network of the oil circulation, the flow state is also continuously calculated by a system of equations for the pressure drops in all the branches (43, 44, 45, 46, 47, 48, 49, 50, 55, 56, 57, 58, 59, 60, 64, 65, 66, 67, 68, 69, 73, 74, 75, 76, 77, 78, 79, 80, 81) of the hydraulic network.

**18.** Method according to one of claims 1 to 17, **characterized in that** for each branch (43, 44, 45, 46, 47, 48, 49, 50, 55, 56, 57, 58, 59, 60, 64, 65, 66, 67, 68, 69, 73, 74, 75, 76, 77, 78, 79, 80, 81) in the hydraulic network the vector for a virtual driving pressure difference f

$$f = g \cdot \rho \cdot \beta \cdot \Delta H \cdot T + \rho d$$

is determined,
$f(N/m^2)$ being the driving pressure difference,
$g(m/s^2)$ being the acceleration due to gravity,
$\rho(kg/m^2)$ being the density of the oil,
$\beta$ being the expansion coefficient of the oil,
$\Delta H(m)$ being the height difference between the starting point and the end point of the branch,
$T(°C)$ being the mean temperature of the oil in the branch, and $pd(N/m^2)$, if present, being the pressure difference in the branch caused by a pump,
and **in that** the matrix equation

$$\varphi = TTRTT \cdot f$$

is used to calculate the vector $\varphi$ of the oil flow (12) in the individual branches (43, 44, 45, 46, 47, 48, 49, 50, 55, 56, 57, 58, 59, 60, 64, 65, 66, 67, 68, 69, 73, 74, 75, 76, 77, 78, 79, 80, 81), TTRTT being a matrix which contains the information relating to the hydraulic resistances (13) in all branches (43, 44, 45, 46, 47, 48, 49, 50, 55, 56, 57, 58, 59, 60, 64, 65, 66, 67, 68, 69, 73, 74, 75, 76, 77, 78, 79, 80, 81) and relating to the structure of the hydraulic network.

**19.** Method according to one of Claims 1 to 18, **characterized in that** the vectors φ of the oil flow (12) are determined in an iterative process, this process being continued until the output value and result correspond with sufficient accuracy.

**20.** Method according to one of Claims 1 to 19, **characterized in that** a continuous adaptation of parameters is carried out with the aid of two auxiliary variables (9), one auxiliary variable (9) taking account of the dependence of the losses (10) on the temperature (tqm, tqh, tom, tok) and the second auxiliary variable (9) taking account of the dependence of the oil flow (12) on the temperature (tqm, tqh, tom, tok), and **in that** the non-linear behaviour of the oil flow (12) with regard to pressure drop and flow rate is simulated by feedback (23, 24) of the oil flow (12) via the hydraulic resistances (13).

**21.** Method according to one of Claims 1 to 20, **characterized in that** in a feedback (20) of the state variables (19) of temperatures (tqm, tqh, tom, tok) to the auxiliary variables of losses (10), account is taken of the temperature dependence of the specific resistance of the conductor material.

**22.** Method according to one of Claims 1 to 21, **characterized in that** in a thermohydraulic model (7) a feedback (22, 25) of the state variables (19) of temperatures (tqm, tqh, tom, tok) to the hydraulic resistances (13) and/or to the oil flow (12) is carried out, the totality of all oil flows (12), represented by the vector φ, being dependent on temperature in a two-fold way, specifically depending on the driving, on the one hand, and depending on the viscosity of the oil, and thus on the hydraulic resistances (13), on the other hand.

**23.** Arrangement for carrying out the method for determining state variables of an oil-cooled transformer which describe the instantaneous temperature state of the transformer, comprising:

(a) a function block (100) for measuring input variables (1) and for detecting a state or a status (5) of coolers which are connected to the transformer,
(b) a thermohydraulic model (7) to which the measured input variables (1) and the state or status (5) of the coolers are fed, which state variables (19) are calculated with the aid of auxiliary variables (9), account being taken of a temperature dependence of auxiliary variables,
**characterized in that**
(c) the thermohydraulic model (7) comprises a hydraulic network of the oil circulation of the transformer, which has branches (43, 44, 45, 46, 47, 48, 49, 50, 55, 56, 57, 58, 59, 60, 64, 65, 66, 67, 68, 69, 73, 74, 75, 76, 77, 78, 79, 80, 81) and nodes (39, 40, 41, 42, 51, 52, 53, 54, 61, 62, 63, 70, 71, 72, 82, 83, 84, 85, 86), the auxiliary variables being appropriately adapted in the event of a change in the input variables (1) and/or the status (5) of the coolers and/or a switch position (4) of a stepping switch, a rate of change of the state variables (19), and thus new state variables (19), subsequently being calculated.

**Revendications**

**1.** Procédé de détermination de grandeurs d'état d'un transformateur refroidi par de l'huile, qui décrivent l'état de température instantanée du transformateur, comprenant :

a. la mesure de grandeurs ( 1 ) d'entrée,
b. la détection d'un état ou d'un statut ( 5 ) de groupes de refroidissement qui sont raccordés au transformateur,
c. l'introduction des grandeurs ( 1 ) d'entrée qui ont été mesurées et de l'état ou du statut ( 5 ) des groupes de refroidissement dans un modèle ( 7 ) thermohydraulique,
d. le calcul de grandeurs ( 19 ) d'état dans le modèle ( 7 ) thermohydraulique avec des grandeurs ( 9 ) auxiliaires, une variation des grandeurs auxiliaires en fonction de la température étant prise en compte,
**caractérisé en ce que**
e. le modèle ( 7 ) thermohydraulique comprend un réseau hydraulique du circuit d'huile du transformateur, qui a des branches ( 43, 44, 45, 46, 47, 48, 49, 5, 55, 56, 57, 58, 59, 60, 64, 65, 66, 67, 68, 69, 73, 74, 75, 76, 77, 78, 79, 80, 81 ) et des noeuds ( 39, 40, 41, 42, 51, 52, 53, 54, 61, 62, 63, 70, 71, 72, 82, 83, 84, 85, 86 ),
f. lors d'une modification des grandeurs ( 1 ) d'entrée/ou du statut ( 5 ) des groupes de refroidissement et/ou d'une position ( 4 ) d'un commutateur à palier, on adapte les grandeurs auxiliaires en conséquence, ensuite on calcule une vitesse de variation des grandeurs ( 19 ) d'état et ainsi de nouvelles grandeurs ( 19 ) d'état.

**2.** Procédé suivant la revendication 1, **caractérisé en ce que** l'on calcule la vitesse de variation des grandeurs ( 19 ) d'état et les grandeurs ( 19 ) d'état par des équations différentielles.

3. Procédé suivant la revendication 1 ou 2, **caractérisé en ce que**, par les tensions ( 2 ) mesurées par une matrice d'affectation, on détermine la relation entre ces tensions ( 2 ) et le flux magnétique dans les diverses parties du noyau du transformateur et **en ce qu'**on détermine ensuite, par une courbe caractéristique définie par des paramètres, les pertes à vide en fonction de ce flux magnétique.

4. Procédé suivant l'une des revendications 1 à 3, **caractérisé en ce qu'**on définit des branches d'enroulement internes au transformateur, qui sont combinées par une matrice d'affectation de courant, aux courants ( 3 ) mesurés, de préférence aux courants aux bornes, dans lequel en raison de la nécessité de tenir compte de la position en phase, on représente tous les courants ( 3 ) sous la forme de vecteurs ayant deux composantes et **en ce que**, pour chaque branche d'enroulement interne, on détermine la valeur absolue du courant par laquelle on calcule les pertes ohmiques par la résistance correspondante et **en ce que**, par des matrices, qui sont définies tant pour des composantes axiales qu'également pour des composantes radiales, on détermine à partir de la répartition des courants ( 3 ) sur les divers enroulements ( 31, 32, 33, 34 ) la répartition du flux magnétique de dispersion et, à partir de cela, les pertes par courant de Foucault dans les enroulements ( 31, 32, 33, 34 ) et dans les parties inactives du transformateur et **en ce que**, par une matrice, on détermine la relation entre les courants dans des branches d'enroulement et le flux magnétique de dispersion pertinent pour les branches produisant des pertes et on calcule les pertes par courant de Foucault par des facteurs qui sont déterminés à partir de la géométrie de l'enroulement.

5. Procédé suivant la revendication 3 et 4, **caractérisé en ce qu'**on réalise les matrices et la matrice d'affectation pertinente et les résistantes ohmiques d'enroulement en fonction de la position du commutateur.

6. Procédé suivant l'une des revendications 1 à 5, **caractérisé en ce que** pour chaque modification de la position ( 4 ) du commutateur à paliers, on effectue une opération ( 8 ) d'initialisation, dans lequel la matrice d'affectation tension-flux magnétique, la matrice courants-courants internes d'enroulement et les résistances ohmiques d'enroulement sont contrôlées et le cas échéant modifiées.

7. Procédé suivant l'une des revendications 1 à 6, **caractérisé en ce que** l'on introduit le statut ( 5 ) des groupes de refroidissement dans au moins l'un des paramètres de la transmission ( 11 ) de chaleur entre l'huile et l'atmosphère ambiante et on exprime la relation correspondante entre des ventilateurs ( 36, 37, 38 ) et des branches ( 73, 74, 75, 76, 77, 78, 79, 80, 81 ) de refroidissement dans une matrice d'affectation.

8. Procédé suivant l'une des revendications 1 à 7, **caractérisé en ce que** l'on calcule les températures moyennes dans des parties de transformateur produisant des pertes par l'équation différentielle

$$\frac{d}{dt}tqm = \frac{V_{ges} - wim}{cqg}$$

dans laquelle
tqm ( °C ) est la température moyenne d'une partie de transformateur produisant des pertes ,
$V_{ges}$ ( kW ) représente la perte globale de la partie de transformateur produisant des pertes,
cqg ( kWmin/K ) est la capacité calorifique de la partie de transformateur produisant des pertes,
et wim ( kW ) est la puissance perdue cédée par la partie de transformateur produisant des pertes à l'huile qui passe.

9. Procédé suivant la revendication 8, **caractérisé en ce que** l'on calcule la puissance wim perdue cédée à l'huile qui passe par la formule

$$wim = V0g \cdot \left(\frac{g}{g0}\right)^{xg}$$

dans laquelle
Vog ( kW ) sont les pertes de référence,
G ( K ) est la différence entre la température moyenne de la partie du transformateur produisant des pertes et la température moyenne de l'huile appliquée désigné par saut moyen,
gO est le saut moyen à l'état stationnaire et pour les pertes de référence et
xg est l'exposant de la transmission de chaleur entre la partie de transformateur produisant des pertes et l'huile en fonction de la température de l'huile et de la vitesse de l'huile.

**10.** Procédé suivant l'une des revendications 1 à 9, **caractérisé en ce que** l'on calcule les températures de point chaud dans des parties du transformateur produisant des pertes par l'équation différentielle

$$\frac{d}{dt}tqh = \frac{V_{hot} - wih}{cqh}$$

dans laquelle
tqh ( °C ) est la température du point chaud d'une partie de transformateur produisant des pertes,
$V_{hot}$ ( kW ) est la perte totale multipliée par un « facteur de point chaud » de la partie de transformateur produisant des pertes ,
Cqh ( kWmin/K ) est la capacité calorifique de la partie du transformateur produisant des pertes recalculée sur les conditions au point de la température maximum et
Wih ( kW ) est la puissance perdue cédée par le point le plus chaud de la partie du transformateur produisant des pertes à l'huile qui passe.

**11.** Procédé suivant la revendication 10, **caractérisé en ce que** l'on calcule la puissance wih perdue cédée par un point chaud à l'huile qui passe par la formule

$$wih = V0h \cdot \left(\frac{h}{h0}\right)^{xh}$$

dans laquelle
Voh ( kW ) sont les pertes de référence pour le point chaud,
H ( K ) est la différence entre la température maximum de la partie du transformateur produisant des pertes et la température de l'huile au point le plus chaud de la partie du transformateur désignée comme saut de point chaud,
hO est le saut de point chaud à l'état stationnaire et pour les pertes de référence pour le point chaud et
xh est l'exposant pour la transmission de chaleur entre la partie de transformateur produisant des pertes d'huile, en fonction de la température de l'huile et de la vitesse de l'huile.

**12.** Procédé suivant l'une des revendications 1 à 11, **caractérisé en ce que** l'on calcule les températures moyennes de l'huile dans des branches ( 43, 44, 45, 46, 47, 48, 49,50, 55, 56, 57 , 58, 59, 60, 64, 65, 66, 67, 68, 69, 73, 74, 75, 76, 77, 78, 79, 80, 81 ) du réseau hydraulique du circuit d'huile par l'équation différentielle

$$\frac{d}{dt}tom = \frac{wim - wam - phz \cdot D}{coel_z}$$

dans laquelle
tom ( °C ) est la température moyenne de l'huile dans une branche de courant d'huile,
wim ( kW ) est la puissance perdue cédée par la partie de transformateur produisant des pertes à l'huile qui passe,
wam ( kW ) est la puissance perdue cédée par une branche à l'atmosphère ambiante,
phZ ( kW/K ) est le flux d'huile dans la branche exprimé en puissance calorifique transportée par degré de différence de température entre la température de l'huile du début de la branche et de la fin de la branche,
D ( K ) est la différence de température entre la température de l'huile du début de la branche et de la fin de la branche et
$coel_z$ ( kWmin/k ) est la capacité calorifique de l'huile dans la branche d'écoulement.

**13.** Procédé suivant la revendication 12, **caractérisé en ce que** l'on calcule la puissance wam calorifique cédée par une branche ( 43, 44, 45, 46, 47, 48, 49, 50, 55, 56, 57, 58, 59, 60, 64, 65, 66, 67, 68, 69, 73, 74, 75, 76, 77, 78, 79, 80, 81 ) à l'atmosphère ambiante par la formule

$$\text{wam} = \text{wam0} \cdot \left( \frac{\vartheta}{\vartheta_0} \right)^{x\vartheta} \cdot \text{fup} - \text{VK} - \text{sun}$$

dans laquelle

wam0 ( kW ) est la valeur de référence de la puissance calorifique cédée,

$\vartheta$ ( K ) est la différence de température entre la température moyenne de l'huile dans la branche et la température ambiante,

$\vartheta_o$ ( K ) est la valeur de référence pour la différence de température pour laquelle la valeur wam0 est définie,

$x\vartheta$ est l'exposant pour la transmission de chaleur entre l'huile et l'atmosphère ambiante en fonction du type de refroidissement,

fup est un facteur pour l'influence de la température $\vartheta$ ) ambiante et le cas échéant de la pression de l'air,

VK ( kW ) est la puissance de perte par dispersion dans le chaudron et le cas échéant une branche du dispositif de refroidissement qui représente une surface de chaudron et

Sun ( kW ) est la puissance du rayonnement solaire.

**14.** Procédé suivant l'une des revendications 1 à 13, **caractérisé en ce que** l'on calcule les températures moyennes de l'huile dans des noeuds ( 39, 40, 41, 42, 51, 52, 53, 54, 61, 62, 63, 70, 71, 72, 82, 83, 84, 85, 86 ) du réseau hydraulique du circuit d'huile par l'équation différentielle

$$\frac{d}{dt}\text{tok} = \frac{\sum_{i=1}^{n_z} \text{phz} \cdot T_{\text{eff}}}{\text{coel}_K}$$

dans laquelle

tok ( °C ) est à la température moyenne de l'huile dans un noeud,

$n_z$ est le nombre des branches qui arrivent sur ce noeud,

phz ( kW/K ) est le flux ( 12 ) d'huile dans une des branches qui arrive,

$T_{\text{elf}}$ ( °C ) est à la température de l'huile à l'extrémité de la branche reliée au noeud, qui dépend sensiblement du sens du courant et

$\text{coel}_k$ ( kWmin/k ) est à la capacité calorifique de l'huile dans ce noeud.

**15.** Procédé suivant l'une des revendications 1 à 14, **caractérisé en ce qu'**on résout les équations différentielles par un procédé numérique connu, par exemple par la méthode de Runge-Kitta.

**16.** Procédé suivant l'une des revendications 1 à 15, **caractérisé en ce qu'**on associe aux branches ( 43, 44, 45, 46, 47, 48, 49, 50, 55, 56, 57, 58, 59, 60, 64, 65, 66, 67, 68, 69, 73, 74, 75, 76, 77, 78, 79, 80, 81 ) et également aux noeuds ( 39, 40, 41, 42, 51, 52, 53, 54, 61, 62, 63, 70, 71, 72, 82, 83, 84, 85, 86 ) un volume d'huile déterminé qui correspond dans la somme au volume d'huile globale.

**17.** Procédé suivant l'une des revendications 1 à 16, **caractérisé en ce que**, pour la solution des équations différentielles pour les températures ( tom ) moyennes de l'huile dans les branches ( 43, 44, 45, 46, 47, 48, 49, 50, 55, 56, 57, 58, 59, 60, 64, 65, 66, 67, 68, 69, 73, 74, 75, 76, 77, 78, 79, 80, 81 ) et dans les noeuds ( 39, 40, 41, 42, 51, 52, 53, 54, 61, 62, 63, 70, 71, 72, 82, 83, 84, 85, 86 ) du réseau hydraulique du circuit d'huile, on calcule en continu l'état du courant par un système d'équations pour les pertes de charge dans toutes les branches ( 43, 44, 45, 46, 47, 48, 49, 50, 55, 56, 57, 58, 59, 60, 64, 65, 66, 67, 68, 69, 73, 74, 75, 76, 77, 78, 79, 80, 81 ) de tout le réseau hydraulique.

**18.** Procédé suivant l'une des revendications 1 à 17, **caractérisé en ce qu'**on détermine pour chaque branche ( 43, 44, 45, 47, 48, 49, 50, 55, 56, 57, 58, 59, 60, 64, 65, 66, 67, 68, 69, 73, 74, 75, 76, 77, 78, 79, 80, 81 ) du circuit hydraulique le vecteur pour une différence f de pression agissante

$$f = g . \rho . \beta . \Delta H . T + p d$$

dans laquelle ( N/m$^2$ ) est la différence de pression agissante ,

g ( m/s$^2$ ) est l'accélération de la pesanteur,

p ( kg/m$^2$) est la masse volumique de l'huile,

β est le coefficient dilatation de l'huile,

ΔH ( m ) est la différence de niveau entre le point de début et le point de fin de la branche

T ( °C ) est la température moyenne de l'huile dans la branche et

Pd ( N/m$^2$ ) dans la mesure où il est présent est la différence de pression provoquée par une pompe dans la branche et **en ce que** on calcule par l'équation matricielle

$$\varphi = TTRTT . f$$

le vecteur φ du courant ( 12 ) d'huile dans les diverses branches ( 43, 44, 45, 46, 47, 48, 49, 50, 55, 56, 57, 58, 59, 60, 64, 65, 66, 67, 68, 69, 73, 74, 75, 76, 77, 78, 79, 80, 81 ), TTRTT étant une matrice qui contient l'information sur les résistances ( 13 ) hydrauliques dans toutes les branches ( 43, 44, 45, 46, 47, 48, 49, 50, 55, 56, 57, 58, 59, 60, 64, 65, 66, 67, 68, 69, 73, 74, 75, 76, 77, 78, 79, 80, 81 ) et sur la structure du réseau hydraulique.

19. Procédé suivant l'une des revendications 1 à 18, **caractérisé en ce que** l'on détermine des vecteurs φ du courant ( 12 ) d'huile par itération, cette itération se prolongeant jusqu'à ce que la valeur initiale et le résultat coïncident avec une précision suffisante.

20. Procédé suivant l'une des revendications 1 à 19, **caractérisé en ce qu'**on effectue une adaptation continue de paramètres avec deux grandeurs ( 9 ) auxiliaires, une grandeur ( 9 ) auxiliaire tenant compte de la variation des pertes ( 10 ) en fonction de la température ( tqm, tqh, tom, tok ) et la deuxième grandeur ( 9 ) auxiliaire tenant compte de la variation du courant ( 12 ) d'huile en fonction de la température ( tqm, tqh, tom, tok ) et **en ce que** l'on reproduit le comportement non linéaire du courant ( 12 ) d'huile en ce qui concerne la perte de charge et la vitesse du courant par une réaction ( 23, 24 ) du courant ( 12 ) d'huile sur les résistances ( 13 ) hydrauliques.

21. Procédé suivant l'une des revendications 1 à 20, **caractérisé en ce que** dans un recyclage ( 20 ) des grandeurs ( 19 ) d'état, de températures ( tqm, tqh, tom, tok ) sur les grandeurs auxiliaires des pertes ( 10 ), on tient compte de la variation en fonction de la température de la résistance spécifique du matériau conducteur.

22. Procédé suivant l'une des revendications 1 à 21, **caractérisé en ce que** dans le modèle ( 7 ) thermohydraulique on effectue une réaction ( 22,25 ) des grandeurs ( 19 ) d'état des températures ( tqm, tqh, tom, tok ) sur les résistances ( 13 ) hydrauliques ou sur le courant ( 12 ) d'huile, la totalité de tous les courants ( 12 ) d'huile, représentée par le vecteur φ, dépendant de la température de deux façons, à savoir d'une part par la différence de pression agissante et d'autre part par la viscosité de l'huile et ainsi des résistances ( 13 ) hydrauliques.

23. Dispositif pour la mise en oeuvre du procédé de détermination de grandeurs d'état d'un transformateur refroidi par de l'huile, qui décrivent l'état de température instantanée de température comprenant :

   a) un bloc ( 100 ) fonctionnel de mesure de grandeurs ( 1 ) d'entrée et de détection d'un état ou d'un statut ( 5 ) de groupes de refroidissement, qui sont raccordés au transformateur,
   b) un modèle ( 7 ) thermohydraulique auxquelles les grandeurs ( 1 ) d'entrée qui sont mesurées et l'état ou le statut ( 5 ) des groupes de refroidissement sont apportés, lequel calcul des grandeurs ( 19 ) d'état avec des grandeurs ( 9 ) auxiliaires, une variation des grandeurs auxiliaires en fonction de la température étant prise en compte,
   **caractérisé en ce que**
   c) le modèle ( 7 ) thermohydraulique comprend un réseau hydraulique du circuit d'huile du transformateur qui a des branches ( 43, 44, 45, 46, 47, 48, 49, 50, 55, 56, 57, 58, 59, 60, 64, 65, 66, 67, 68, 69, 73, 74, 75, 76, 77, 78, 79, 80, 81 ) et des noeuds ( 39, 40, 41, 42, 51, 52, 53, 54, 61, 62, 63, 70, 71, 72, 82, 83, 84, 85, 86 ), dans lequel, lors d'une variation des grandeurs ( 1 ) d'entrée/ou du statut ( 5 ) des groupes de refroidissement et/ou d'une position ( 4 ) d'un commutateur à paliers, les grandeurs auxiliaires sont adaptées en conséquence, ensuite une vitesse de variation des grandeurs ( 19 ) d'état et ainsi de nouvelles grandeurs ( 19 ) d'état sont calculées.

Fig. 1

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4654804 A

- FR 2526599 A